# EUROPÄISCHE PATENTANMELDUNG

(11) **EP 4 417 106 A1**
(43) Veröffentlichungstag der Anmeldung: **21.08.2024**
(21) Anmeldenummer: 23157005.2
(22) Anmeldetag: 16.02.2023
(51) Int. Cl.: A61B 1/24, A61C 5/90, B29C 45/26

(54) **SPRITZGUSSWERKZEUG ZUR HERSTELLUNG EINES MUNDWANGENHALTERS**

(71) Anmelder: Ivoclar Vivadent AG, 9494 Schaan (LI)
(72) Erfinder: LICHTENSTEIGER, Markus, 9462 Montlingen (CH)
(74) Vertreter: Baldus, Oliver

(57) **Zusammenfassung**

Die vorliegende Erfindung betrifft ein Spritzgusswerkzeug (100) zur Herstellung eines Mundwangenhalters (101) mittels Spritzgusses, mit einer ersten ringförmigen Kavität (107-1) zum Spritzen eines Lippenrings (103); einer zweiten ringförmigen Kavität (107-2) zum Spritzen eines Vestibulärrings (105); und einer dritten Kavität (107-3) zum Erzeugen eines Folienabschnitts zwischen dem Lippenring (103) und dem Vestibulärring (105), die im Querschnitt u-förmig zwischen der ersten Kavität (107-1) und der zweiten Kavität (107-2) verläuft.

## Beschreibung

Die vorliegende Erfindung betrifft ein Spritzgusswerkzeug zur Herstellung eines Mundwangenhalters und ein Verfahren zur Herstellung eines Mundwangenhalters.

Die herkömmliche Herstellung eines Mundwangenhalters erfordert einen Kaltkanal, der durch ein Einweg-Kunststoffteil innerhalb eines Spritzgusswerkzeuges gebildet wird. Das Einweg-Kunststoffteil verstopft beim Spritzgießen und muss bei der erneuten Herstellung eines weiteren Mundwangenhalters durch ein neues Einweg-Kunststoffteil ersetzt werden. Auf diese Weise wird bei der Herstellung Mundwangenhalter viel Kunststoffabfall erzeugt.

Es ist die technische Aufgabe der Erfindung, einen Mundwangenhalter effizient herzustellen.

Diese technische Aufgabe wird durch Gegenstände nach den unabhängigen Ansprüchen gelöst. Technisch vorteilhafte Ausführungsformen sind Gegenstand der abhängigen Ansprüche, der Beschreibung und der Zeichnungen.

Gemäß einem ersten Aspekt wird die technische Aufgabe durch ein Spritzgusswerkzeug zur Herstellung eines Mundwangenhalters mittels Spritzgusses gelöst, mit einer ersten ringförmigen Kavität zum Spritzen eines Lippenrings; einer zweiten ringförmigen Kavität zum Spritzen eines Vestibulärrings; und einer dritten Kavität zum Erzeugen eines Folienabschnitts zwischen dem Lippenring und dem Vestibulärring, die im Querschnitt u-förmig zwischen der ersten Kavität und der zweiten Kavität verläuft. Dadurch kann der Mundwangenhalter im gefalteten Zustand ohne Kaltkanal hergestellt werden. Auf diese Weise kann der Mundwangenhalter ohne Einweg-Kunststoffteile hergestellt werden und eine Abfallmenge verringert sich.

In einer technisch vorteilhaften Ausführungsform des Spritzgusswerkzeugs ist die erste ringförmige Kavität um die zweite ringförmige Kavität herum angeordnet. Dadurch wird beispielsweise der technische Vorteil erreicht, dass der Mundwangenhalter gleichmäßig hergestellt werden kann.

In einer weiteren technisch vorteilhaften Ausführungsform des Spritzgusswerkzeugs sind die erste ringförmige Kavität und die zweite ringförmige Kavität konzentrisch zueinander angeordnet. Dadurch wird beispielsweise der technische Vorteil erreicht, dass der Mundwangenhalter platzsparend hergestellt werden kann.

In einer weiteren technisch vorteilhaften Ausführungsform des Spritzgusswerkzeugs sind die erste ringförmige Kavität und die zweite ringförmige Kavität in einer Ebene in dem Spritzgusswerkzeug angeordnet. Dadurch wird beispielsweise der technische Vorteil erreicht, dass sich die Herstellung des Spritzgusswerkzeugs vereinfacht.

In einer weiteren technisch vorteilhaften Ausführungsform des Spritzgusswerkzeugs ist ein erster Einspritzkanal zum Einspritzen einer Kunststoffmasse in die erste ringförmige Kavität vorgesehen. Dadurch wird beispielsweise der technische Vorteil erreicht, dass eine Kunststoffmasse effizient in die Kavität eingebracht werden kann.

In einer weiteren technisch vorteilhaften Ausführungsform des Spritzgusswerkzeugs ist ein zweiter Einspritzkanal zum Einspritzen einer Kunststoffmasse in die zweite ringförmige Kavität vorgesehen. Dadurch wird beispielsweise ebenfalls der technische Vorteil erreicht, dass eine Kunststoffmasse effizient in die Kavität eingebracht werden kann.

In einer weiteren technisch vorteilhaften Ausführungsform des Spritzgusswerkzeugs sind der erste Einspritzkanal und der zweite Einspritzkanal parallel angeordnet. Dadurch wird beispielsweise der technische Vorteil erreicht, dass die Kunststoffmasse in beide Kavitäten von einer Oberseite des Spritzgusswerkzeuges eingebracht werden kann.

In einer weiteren technisch vorteilhaften Ausführungsform des Spritzgusswerkzeugs werden der erste Einspritzkanal und/oder der zweite Einspritzkanal jeweils durch einen Heißkanal gebildet. Dadurch wird beispielsweise der technische Vorteil erreicht, dass auf einen Kaltkanal verzichtet werden kann.

In einer weiteren technisch vorteilhaften Ausführungsform des Spritzgusswerkzeugs umfasst die erste Kavität einen Einspritzkanal für eine Hartkomponente und einen Einspritzkanal für eine Weichkomponente. Dadurch wird beispielsweise der technische Vorteil erreicht, dass der Lippenring mit zwei unterschiedlichen Kunststoffkomponenten hergestellt werden kann.

In einer weiteren technisch vorteilhaften Ausführungsform des Spritzgusswerkzeugs umfasst die zweite Kavität einen Einspritzkanal für eine Hartkomponente und einen Einspritzkanal für eine Weichkomponente. Dadurch wird beispielsweise der technische Vorteil erreicht, dass der Vestibulärring mit zwei unterschiedlichen Kunststoffkomponenten hergestellt werden kann.

In einer weiteren technisch vorteilhaften Ausführungsform des Spritzgusswerkzeugs ist das Spritzgusswerkzeug ohne Kaltkanal ausgebildet. Dadurch wird beispielsweise ebenfalls der technische Vorteil erreicht, dass sich eine Abfallmenge verringert.

Gemäß einem zweiten Aspekt wird die technische Aufgabe durch ein Verfahren zum Herstellen eines Mundwangenhalters gelöst, mit dem Schritt eines Einspritzens einer Kunststoffmasse in ein Spritzgusswerkzeug nach dem ersten Aspekt. Dadurch werden die gleichen technischen Vorteile wie durch das Spritzgusswerkzeug nach dem ersten Aspekt erreicht.

In einer technisch vorteilhaften Ausführungsform des Verfahrens wird die Kunststoffmasse durch einen ersten Heißkanal in die erste ringförmige Kavität und einen zweiten Heißkanal in die zweite ringförmige Kavität eingespritzt. Dadurch wird beispielsweise ebenfalls der technische Vorteil erreicht, dass der Mundwangenhalter effizient hergestellt werden kann.

In einer weiteren technisch vorteilhaften Ausführungsform des Verfahrens wird der u-förmig gefaltete Mundwangenhalter auseinandergezogen. Dadurch wird beispielsweise ebenfalls der technische Vorteil erreicht, dass der Mundwangenhalter direkt bei einem Patienten verwendet werden kann.

Gemäß einem zweiten Aspekt wird die technische Aufgabe durch einen gefalteter Mundwangenhalter gelöst, der durch ein Verfahren nach dem zweiten Aspekt hergestellt ist. Dadurch werden ebenfalls die gleichen technischen Vorteile wie durch das Spritzgusswerkzeug nach dem ersten Aspekt erreicht.

Ausführungsbeispiele der Erfindung sind in den Zeichnungen dargestellt und werden im Folgenden näher beschrieben.

Es zeigen:
- Fig. 1: eine schematische Ansicht einer herkömmlichen Herstellung eines Mundwangenhalters;
- Fig. 2: eine schematische Ansicht einer neuen Herstellung eines Mundwangenhalters;
- Fig. 3: eine schematische Querschnittsansicht des Spritzgusswerkzeugs für den Mundwangenhalter;
- Fig. 4: eine perspektivische Ansicht des gefalteten Mundwangenhalters; und
- Fig. 5: eine weitere perspektivische Ansicht eines gefalteten Mundwangenhalters.

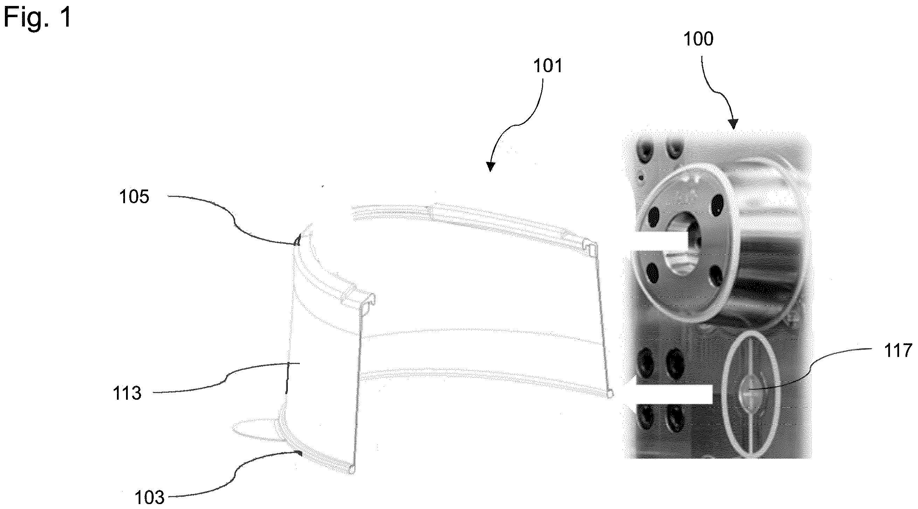

Fig. 1 zeigt eine schematische Ansicht einer herkömmlichen Herstellung eines Mundwangenhalters 101. Der Mundwangenhalters 101 wird bei einer Zahnbehandlung in den Mund eines Patienten eingesetzt. Der Mundwangenhalters 101 dient dazu einen freien Zugang zum Mund eines Patienten aufrechtzuerhalten und ein hygienisches Arbeiten bei der Zahnbehandlung zu ermöglichen.

Der Mundwangenhalter 101 ist aus einem elastischen Kunststoff gebildet und umfasst einen Vestibulärring 105 und einen Lippenring 103. Beide Ringe sind steif, aber dennoch elastisch verformbar. Zwischen dem Vestibulärring 105 und dem Lippenring 103 erstreckt sich ein dünnerer Folienabschnitt 113. Der Folienabschnitt 113 ist oval- oder kreisringförmig ausgebildet und erstreckt sich zwischen dem Vestibulärring 105 und dem Lippenring 103 erstreckende Folienabschnitt 113.

Der Mundwangenhalters 101 wird durch ein Spritzgussverfahren hergestellt. Dabei wird der Vestibulärring 105 in einer ringförmigen Kavität in einem Spritzgusswerkzeug 100 hergestellt. Die Kavität des Spritzgusswerkzeugs 100 ist der Hohlraum, in den die flüssige Kunststoffmasse einläuft oder eingespritzt wird.

Hierzu wird die flüssige Kunststoffmasse über einen Heißkanal in die Kavität eingespritzt. Der Heißkanal ist beim maschinellen Spritzgießen von Thermoplasten in dem restlichen Spritzgusswerkzeug 100 thermisch isoliert und höher temperiert. Dadurch bleibt die Kunststoffmasse permanent fließfähig.

Demgegenüber wird der darunter liegende Lippenring 103 in einer weiteren ringförmigen Kavität mithilfe eines Kaltkanals erzeugt. Der Kaltkanal ist ein Kanal, der einer Temperatur unterhalb der Werkzeugtemperatur gehalten wird. Der Kaltkanal ist erforderlich, um die Kunststoffmasse in die untere Kavität zu leiten.

Um den Kaltkanal gegenüber dem Spritzgusswerkzeugs 100 thermisch zu isolieren, wird ein Kunststoffformteil 117 verwendet, das bei jedem einzelnen Spritzvorgang in das Spritzgusswerkzeug 100 eingesetzt wird. Da die Kunststoffmasse nach dem Spritzen des Mundwangenhalters 101 in dem Kunststoffformteil 117 erstarrt und dieses für einen weiteren Spritzgussvorgang verstopft, muss dieses für die Herstellung jedes Mundwangenhalters 101 erneuert werden. Bei der Herstellung der Mundwangenhalter 101 fällt dabei jedes Mal Abfall an.

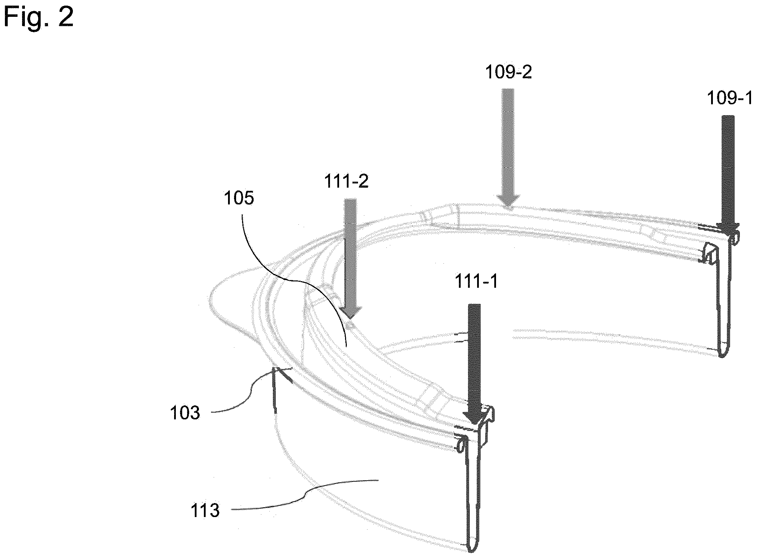

Fig. 2 zeigt eine schematische Ansicht einer neuen Herstellung eines Mundwangenhalters 101. Hierzu wird ein Spritzgusswerkzeug 100 verwendet, das eine ringförmige Kavität zum Spritzen des Lippenrings 103 und eine ringförmige Kavität zum Spritzen des Vestibulärrings 105 umfasst.

Zwischen diesen Kavitäten befindet sich eine weitere Kavität zum Erzeugen des Folienabschnitts 113, die im Querschnitt u-förmig verläuft. In dieser Kavität fließt die Kunststoffmasse zusammen, die von oben in die ringförmige Kavität für den Lippenring 103 und die ringförmige Kavität für den Vestibulärring 105 eingespritzt wird. Dadurch wird der Folienabschnitt 113 gebildet.

Die Kavität für den Lippenring 103 umfasst einen Einspritzkanal 109-1 für eine Hartkomponente und einen Einspritzkanal 109-2 für eine Weichkomponente. Die Hartkomponente ist beispielsweise durch ein Polyolefin gebildet. Die Weichkomponente ist beispielsweise durch ein thermoplastisches Elastomer gebildet. Dadurch wird es möglich den Lippenring 103 mit zwei unterschiedlichen Kunststoffmaterialien herzustellen.

Die Kavität für den Vestibulärring 105 umfasst ebenfalls einen Einspritzkanal 111-1 für eine Hartkomponente und einen Einspritzkanal 111-2 für eine Weichkomponente. Diese können den Komponenten entsprechen, aus denen der Lippenring 103 gebildet wird. Dadurch wird es möglich den Vestibulärring 105 mit zwei unterschiedlichen Kunststoffmaterialien herzustellen.

Durch die Herstellung mit dem u-förmig gefalteten Folienabschnitt 113 wird es ermöglicht, die Kunststoffmasse von oben mittels jeweils einem Heißkanal einzuspritzen. Der Kaltkanal mit dem einsetzbaren Kunststoffformteil 117 entfällt in diesem Fall, so dass der Mundwangenhalter 101 mit geringerem Materialaufwand hergestellt werden kann.

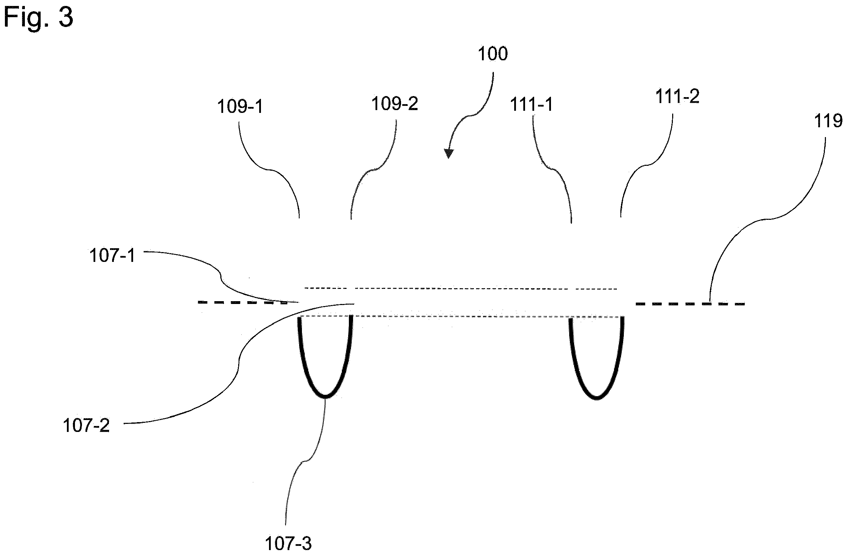

Fig. 3 zeigt eine schematische Querschnittsansicht des Spritzgusswerkzeugs 100 für den Mundwangenhalter 101. Das Spritzgusswerkzeug 100 dient zur Herstellung des Mundwangenhalters 101 mittels Spritzgusses. Das Spritzgusswerkzeug 100 umfasst eine erste ringförmige Kavität 107-1 zum Spritzen des Lippenrings 103 und eine zweite ringförmige Kavität 107-2 zum Spritzen des Vestibulärrings 105. Eine dritte Kavität 107-3 dient zum Erzeugen des Folienabschnitts 113 zwischen dem Lippenring 103 und dem Vestibulärring 105. Die dritte Kavität 107-3 verläuft im Querschnitt u-förmig zwischen der ersten Kavität 107-1 und der zweiten Kavität 107-2. Entlang der Linie 119 erfolgt eine Formtrennung.

Die Einspritzkanäle 109-1, 109-2 dienen zum Einspritzen der Kunststoffmasse in die erste ringförmige Kavität 107-1. Die Einspritzkanäle 111-1, 111-2 dienen zum Einspritzen der Kunststoffmasse in die zweite ringförmige Kavität 107-2. Von dort aus breitet sich die Kunststoffmasse in die Dritte Kavität aus.

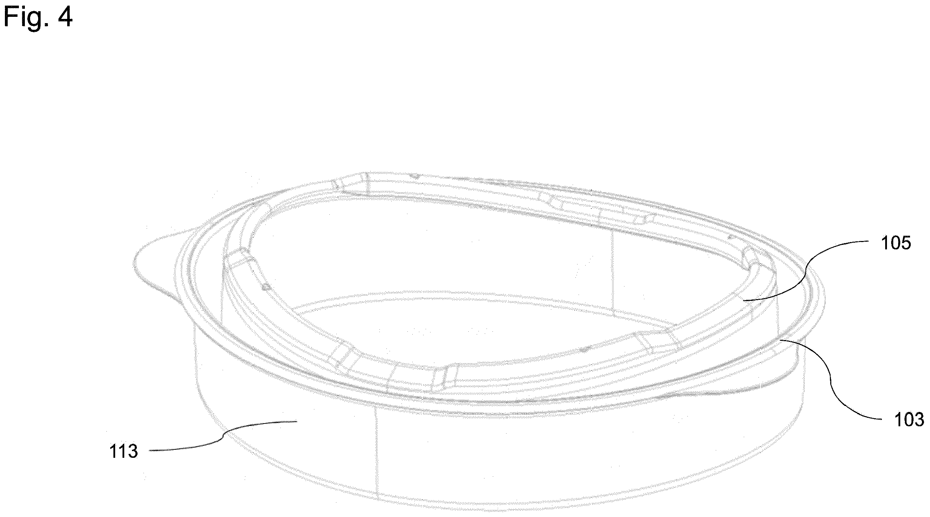

Fig. 4 zeigt eine perspektivische Ansicht des Mundwangenhalters 101. Nach dem Spritzgießen liegt der Mundwangenhalter 101 einer Form vor, in der der Folienabschnitt 113 u-förmig gefaltet ist. Wird der Vestibulärring 105 und der Lippenring 103 auseinandergezogen, ergibt sich die in Figur 1 gezeigte Form des Mundwangenhalters 101.

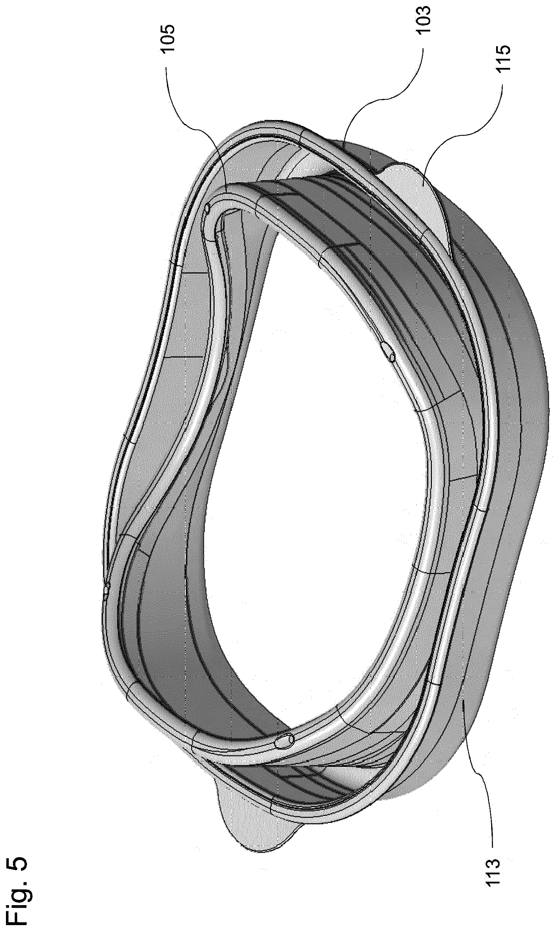

Fig. 5 zeigt eine weitere perspektivische Ansicht eines gefalteten Mundwangenhalters 101. Nach dem Auseinanderziehen kann der Mundwangenhalter 101 in den Mund eines Patienten eingesetzt werden. Am Rand des Lippenring 103 ist eine zungenförmiger Greifabschnitt 115 gebildet, der seitlich herausragt.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Alle Verfahrensschritte können durch Vorrichtungen implementiert werden, die zum Ausführen des jeweiligen Verfahrensschrittes geeignet sind. Alle Funktionen, die von gegenständlichen Merkmalen ausgeführt werden, können ein Verfahrensschritt eines Verfahrens sein.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Spritzgusswerkzeug
- 101: Mundwangenhalter
- 103: Lippenring
- 105: Vestibulärring
- 107: Kavität
- 109: Einspritzkanal
- 111: Einspritzkanal
- 113: Folienabschnitt
- 115: Greifabschnitt
- 117: Kunststoffformteil
- 119: Formtrennung

## Patentansprüche

1. Spritzgusswerkzeug (100) zur Herstellung eines Mundwangenhalters (101) mittels Spritzgusses, mit:
einer ersten ringförmigen Kavität (107-1) zum Spritzen eines Lippenrings (103);
einer zweiten ringförmigen Kavität (107-2) zum Spritzen eines Vestibulärrings (105); und
einer dritten Kavität (107-3) zum Erzeugen eines Folienabschnitts (113) zwischen dem Lippenring (103) und dem Vestibulärring (105), die im Querschnitt u-förmig zwischen der ersten Kavität (107-1) und der zweiten Kavität (107-2) verläuft.

2. Spritzgusswerkzeug (100) nach Anspruch 1, wobei die erste ringförmigen Kavität (107-1) um die zweite ringförmige Kavität (107-2) herum angeordnet ist.

3. Spritzgusswerkzeug (100) nach einem der vorangehenden Ansprüche, wobei die erste ringförmige Kavität (107-1) und die zweite ringförmige Kavität (107-2) konzentrisch zueinander angeordnet sind.

4. Spritzgusswerkzeug (100) nach einem der vorangehenden Ansprüche, wobei die erste ringförmige Kavität (107-1) und die zweite ringförmige Kavität (107-2) in einer Ebene in dem Spritzgusswerkzeug (100) angeordnet sind.

5. Spritzgusswerkzeug (100) nach einem der vorangehenden Ansprüche, wobei ein erster Einspritzkanal (109-1, 109-2) zum Einspritzen einer Kunststoffmasse in die erste ringförmige Kavität (107-1) vorgesehen ist.

6. Spritzgusswerkzeug (100) nach einem der vorangehenden Ansprüche, wobei ein zweiter Einspritzkanal (111-1, 111-2) zum Einspritzen einer Kunststoffmasse in die zweite ringförmige Kavität (107-2) vorgesehen ist.

7. Spritzgusswerkzeug (100) nach Anspruch 5 und 6, wobei der erste Einspritzkanal (109-1, 109-2) und der zweite Einspritzkanal (111-1, 111-2) parallel angeordnet sind.

8. Spritzgusswerkzeug (100) nach einem der Ansprüche 5 bis 7, wobei der erster Einspritzkanal (109-1, 109-2) und/oder der zweite Einspritzkanal (111-1, 111-2) jeweils durch einen Heißkanal gebildet werden.

9. Spritzgusswerkzeug (100) nach einem der vorangehenden Ansprüche, wobei die erste Kavität (107-1) einen Einspritzkanal (109-1) für eine Hartkomponente und einen Einspritzkanal (109-2) für eine Weichkomponente umfasst.

10. Spritzgusswerkzeug (100) nach einem der vorangehenden Ansprüche, wobei die zweite Kavität (107-2) einen Einspritzkanal (111-1) für eine Hartkomponente und einen Einspritzkanal (111-2) für eine Weichkomponente umfasst.

11. Spritzgusswerkzeug (100) nach einem der vorangehenden Ansprüche, wobei das Spritzgusswerkzeug (100) ohne Kaltkanal ausgebildet ist.

12. Verfahren zum Herstellen eines Mundwangenhalters (101), mit dem Schritt:
- Einspritzen einer Kunststoffmasse in ein Spritzgusswerkzeug (100) nach einem der Ansprüche 1 bis 11.

13. Verfahren nach Anspruch 13, wobei die Kunststoffmasse durch einen ersten Heißkanal (109-1, 109-2) in die erste ringförmige Kavität (107-1) und einen zweiten Heißkanal (109-1, 109-2) in die zweite ringförmige Kavität (107-1) eingespritzt werden.

14. Verfahren nach Anspruch 12 oder 13, wobei der u-förmig gefaltete Mundwangenhalter (101) auseinandergezogen wird.

15. Gefalteter Mundwangenhalter (101) hergestellt durch ein Verfahren nach Anspruch 13 oder 14.
